# EUROPEAN PATENT APPLICATION

(11) **EP 2 816 747 A1**
(43) Date of publication of application: **24.12.2014**
(21) Application number: 14173367.5
(22) Date of filing: 21.06.2014
(51) Int. Cl.: H04H 60/04

(54) **An audio network, a method of audio route control in an audio network and a method of controlling access to an audio source in an audio network**

(30) Priority: 21.06.2013 GB 201311125
(71) Applicant: Calrec Audio LTD, Hebden Bridge West Yorkshire HX7 8EZ (GB)
(72) Inventor: Lynch, Philip, Manchester, M16 0FZ (GB)
(74) Representative: McDonough, Jonathan

(57) **Abstract**

An audio network comprising
at least one audio input;
at least one audio output, the total number of audio inputs and outputs being greater than two;
a controller adapted to create audio routes, each audio route comprising an audio input, an audio output and an electrical connection therebetween;
a plurality of network clients, each network client being adapted to send a creation signal to the controller to create a new audio route;
the controller being adapted such that on receipt of a creation signal from a second network client requesting creation of a new audio route the controller determines if creation of the new audio route involves an audio input or audio output employed in an audio route created by a first network client and to send an alert to a network client if this is the case, the controller creating the new audio route on receipt of an override signal from the network client

## Description

The present invention relates to an audio network. More particularly, but not exclusively the present invention relates to an audio network comprising a controller which creates audio routes in a network on receipt of a creation request from a network client. The present invention also relates to a method of audio route control in an audio network. More particularly, but not exclusively, the present invention relates to a method of audio route control wherein a network client is prevented from creating an audio route which conflicts with a route created by another network client. In a further aspect the present invention relates to a method of controlling access to an audio source in an audio network. More particularly, but not exclusively, the present invention relates to a method of controlling access to an audio source in an audio network wherein a second network client is only allowed to assume control of an audio source from a first network client on provision of an override signal from a network client. In a further aspect, and not exclusively, the present invention relates to a method of controlling access to an audio source in an audio network wherein when a second network client attempts to control an audio source controlled by a first network client both network clients are denied control of the audio source and can only temporarily regain control on providing an override signal.

Increasingly facilities that handle a large number of audio sources are using audio networks to manage connections between large numbers of audio inputs and audio outputs. Examples of such facilities include TV broadcast studios, outside broadcast mobile trucks, live performance venues, stadia, radio stations, public buildings and business premises.

Audio networks typically comprise a large number of audio sources each connected to an associated audio input. The inputs are electrically connected to audio outputs. The combination of audio input, audio output and electrical connection is referred to as an audio route. A plurality of network clients controls the routes and may also control the control parameters of the audio sources. This is a very attractive arrangement for a broadcast facility where several studio floors are serviced by several control rooms which contain the network clients. This allows different network clients to connect to different studios at different times.

This arrangement can create a situation where several operators using different network clients are routing from a common pool of audio sources to a common pool of audio outputs. Under these circumstances a number of different types of problem can occur.

As a first example a first network client may have created a first audio route from a first audio input to a first audio output. The audio output could for example be the main output of the studio which is being employed by a broadcast distribution system. An operator at a second network client may then attempt to create a second audio route from a second audio input to the first audio output. The broadcast distribution system would see a sudden change in audio signal potentially resulting in a disastrous disruption of service. This is the typical behaviour of audio networks where 'the last to route wins'

In practice this problem is most likely to occur inadvertently when an operator of a network client loads routing data into the network client in advance of starting a live broadcast or at the point where the operator is taking over from another production team.

As a second example the audio sources may comprise one or more control parameters which need to be carefully set to get the best sound quality. For example microphone gain, phantom power or sample rate conversion. If a network client is using a set of audio sources then the control parameters for those sources will have been set to match the requirements for that production. A problem can occur if an operator at a second network client attempts to gain control of one or more of those audio sources for use in a different audio route for a different production. This sharing of audio sources is a common requirement. Typically audio networks allow either network client to make changes to the control parameters. If one network client makes changes to the control parameters this could have a negative impact on the sound quality of the second production.

The present invention seeks to overcome the problems of the prior art.

In a first aspect the present invention provides an audio network comprising at least one audio input;
at least one audio output, the total number of audio inputs and outputs being greater than two;
a controller adapted to create audio routes, each audio route comprising an audio input, an audio output and an electrical connection therebetween;
a plurality of network clients, each network client being adapted to send a creation signal to the controller to create a new audio route;
the controller being adapted such that on receipt of a creation signal from a second network client requesting creation of a new audio route the controller determines if creation of the new audio route involves an audio input or audio output employed in an audio route created by a first network client and to send an alert to a network client if this is the case, the controller creating the new audio route on receipt of an override signal from the network client

Preferably the controller sends an alert when the new audio route employs an audio output used in an audio route created by a first network client.

The controller can send the alert to the second network client.

Alternatively, the controller can send the alert signal to both the first and second network clients, the controller only creating the new audio route on receipt of the override signal from at least one of, preferably both, network clients.

Preferably, the alert signal contains the identity of the first network client.

Preferably, the audio routes pass through the controller.

Preferably the controller maintains a database of audio routes in the network.

Preferably the audio network comprises a signal processor connected to the controller, the controller being adapted to divert a signal passing along an audio route to the processor for processing before returning it to the audio route.

In a further aspect of the invention there is provided a method of audio route control in an audio network, the audio network comprising
at least one audio input;
at least one audio output, the total number of audio inputs and outputs being greater than two;
at least first and second network clients each being adapted to provide a creation signal requesting creation of an audio route, each audio route comprising an audio input, and audio output and an electrical connection therebetween;
the method comprising the steps of
(a) receiving a creation signal from a second network client requesting creation of a new audio route;
(b) determining if creation of the new audio route involves an audio input or audio output in an audio route created by a first network client and sending an alert signal to a network client if this is the case;
(c) creating the audio route on receipt of an override signal from the network client

Preferably, the step of determination comprises determining if the new audio route employs an audio output used in an audio route created by a first network client.

The alert can be sent to the second network client

Alternatively, the alert can be sent to both the first and second network clients and the new audio route is created on receipt of an override signal from at least one of, preferably both, network clients.

Preferably, the alert contains the identity of the first network client.

In a further aspect the present invention provides an audio network comprising
at least one audio source, the audio source having at least one control parameter for controlling the behaviour of the audio source;
a plurality of network clients each adapted to control the audio source across the network by adjusting its control parameter, each of the plurality of network clients being adapted to send a control signal to a controller to request control of the audio source;
the controller being adapted such that on receiving a control signal from a second network client it determines if the requested audio source is already controlled by a first network client and to send an alert to a network client if this is the case, the controller transferring control of the audio source to the second network client on receiving an override signal from the network client.

Preferably the controller sends the alert to the second network client.

Alternatively, the controller sends the alert to both the first and second network clients and transfers control of the audio source to the second network client on receiving the override signal from at least one, preferably both network clients.

Preferably the audio network comprises a plurality of audio sources.

Preferably the at least one audio source and network clients are connected to the controller.

Preferably the controller routes the audio signal received from the audio source to an output port.

In a further aspect of the invention there is provided a method of controlling access to an audio source in an audio network, the audio network comprising
at least one audio source, the audio source having at least one control parameter for controlling the behaviour of the audio source; and
a plurality of network clients adapted to control the audio source across the network by adjusting its control parameter, the network clients being adapted to send a control signal to request control of the audio source;
the method comprising the steps of
(a) receiving the control signal from the second network client;
(b) determining if the requested audio source is already controlled by a first network client and sending an alert to a network client if this is the case; and,
(c) transferring control of the audio source to the second network client on receipt of an override signal from the network client.

Preferably the alert is sent to the second network client.

Alternatively the alert is sent to both the first and second network clients and control of the audio source is transferred to the second network client on receiving the override signal from at least one, preferably both, network clients.

In a further aspect of the invention there is provided an audio network comprising
at least one audio source, the audio source having at least one control parameter for controlling the behaviour of the audio source;
a plurality of network clients each adapted to control the audio source across the network by adjusting its control parameter, each of the plurality of network clients being adapted to send a control signal to a controller to request control of the audio source;
the controller being adapted such that on receiving a control signal from a second network client it determines if the requested audio source is already controlled by a first network client and if so then it sends an alert to both the first and second network clients, the alert preventing control of the audio source by both the first and second network clients; the controller temporarily transferring control of the audio source to one of the first and second audio clients on receipt of an override signal from that network client.

Preferably the controller is adapted to transfer permanent control to one of the first and second network clients on receipt of a release control signal from the other of the first and second network clients

Alternatively the at least one audio source is a protected audio source, the controller only ever transferring temporary control of the audio source to a network client.

Preferably the audio network comprises a plurality of audio sources.

At least one of the plurality of audio sources can be a protected audio source.

In a further aspect of the invention there is provided a method of controlling access to an audio source in an audio network, the audio network comprising
at least one audio source, the audio source having at least one control parameter for controlling the behaviour of the audio source; and
a plurality of network clients each adapted to control the audio source across the network by adjusting its control parameters, the network clients each being adapted to send a control signal to request control of the audio source;
the method comprising the steps of
(a) receiving a control signal from a second network client;
(b) determining if the requested audio source is already controlled by a first network client and if so sending an alert to both the first and second network clients, the alert preventing control of the audio source by both first and second network clients;
(c) temporarily transferring control of the audio source to one of the first and second network clients on receipt of an override signal from that network client.

Preferably the method further comprises the steps of preventing control of the audio source by the first and second network clients after the temporary period has expired and only transferring further control of the audio source to one of the network clients on receipt of a further re-gain control signal from one of the network clients.

The method can further comprise the step of transferring permanent control to one of the first and second network clients on receipt of a release control signal from the other of the first and second network clients.

The present invention will now be described by way of example only and not in any limitative sense with reference to the accompanying drawings in which
Figure 1 shows, in schematic form, an audio network according to the invention; and,
Figure 2 shows, in schematic form, an audio network according to the invention

Shown in figure one, in general form, is an example of an audio network 1 according to the invention. The audio network 1 comprises a plurality of audio inputs 2 and audio outputs 3. Connected to each audio input 2 is an audio source 4. Each audio source 4 typically has one or more control parameters which controls its behaviour.

The audio inputs 2 and audio outputs 3 are connected together by electrical connections 5. An audio input 2, audio output 3 and associated electrical connection 5 is referred to as an audio route 6. The audio routes 6 are created and destroyed by a controller 7.

The audio network 1 further comprises a plurality of network clients 8. The network clients 8 are adapted to send creation signals to the controller 7 requesting creation of audio routes 6. The creation signal typically includes the identity of the required audio input 2 and audio output 3. The network clients 8 are also able to assume control of one or more audio sources 4 and adjust their control parameters as required.

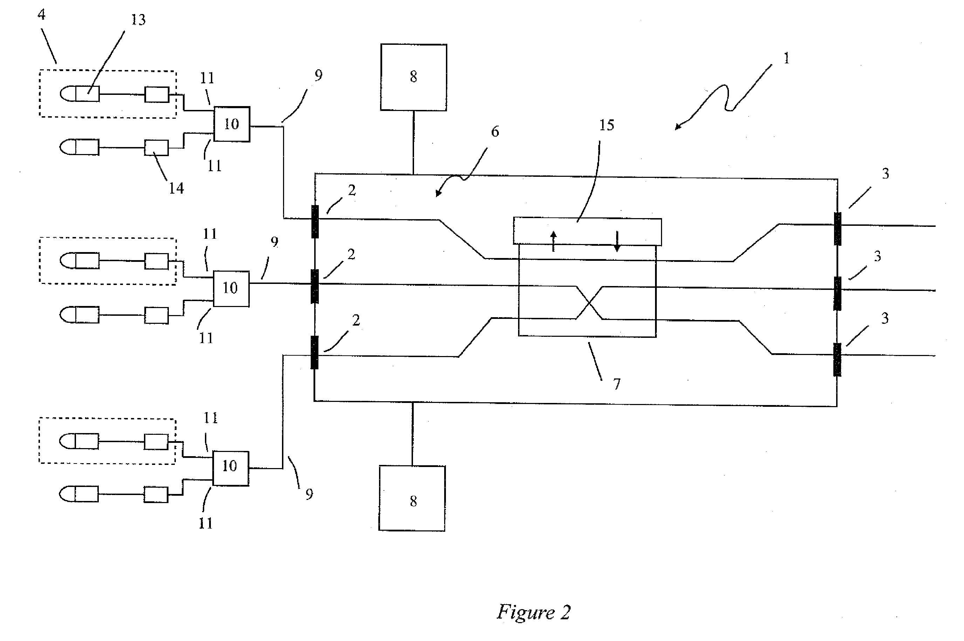

Shown in figure 2 is a further example of an audio network 1 according to the invention. The audio network 1 comprises a plurality of audio inputs 2 and audio outputs 3. Connected to each audio input 2 by a signal line 9 is a multiplexer 10 having a plurality of multiplexer input ports 11. Each multiplexer 10 multiplexes signals received at its multiplexer inputs ports 11 onto the associated signal line 9. Connected to each multiplexer input port 11 is an audio source 4. Each audio source 4 comprises a source 13 of an electrical signal such as a microphone and an audio source control box 14. Typically the audio source control box 14 processes the raw signal from the microphone 13 according to the control parameters it holds. Varying the control parameters varies the way the raw signal is processed before it is passed to the multiplexer 10.

In this embodiment there is at least one processor 15 (typically a digital signal processor) connected to the controller 7. A signal passing along an audio route 6 can optionally be sent to the processor 15 by the controller 7 for processing in some way before being returned to the audio route 6 and then to the output port 3. The network clients 8 (typically the client 8 that created the audio route 6) can instruct the controller 7 to send the signal to the processor 15 or direct to the output port 3.

The controller 7 has been shown conceptually as a single unit. In practice the controller 7 may comprise a master controller and one or more sub controllers connected to the master controller. The master controller controls the routing of the audio routes 6 through the subcontrollers and also through itself. One or more of the subcontrollers may also be connected to a processor 15 to processes audio signals passing along audio routes 6 controlled by that subcontroller.

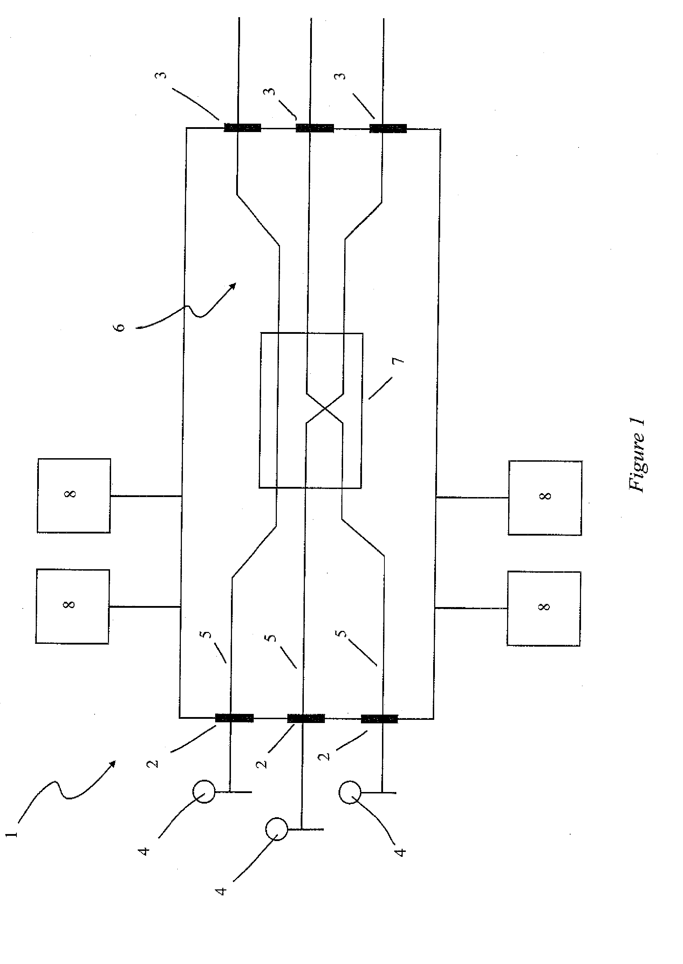

The present invention will now be described by example with reference to figure 1. In a first step a first network client 8 sends a creation signal to the controller 7 requesting creation of an audio route 6 involving specified audio inputs 2 and outputs 3. On receipt of this creation signal the controller 7 checks to see if either of the specified audio input 2 or audio output 3 is employed in an audio route 6 created as a result of a creation request from another network client 8. Assuming they are not the controller 7 then generates the requested audio route 6. A second network client 8 then sends a creation signal to the controller 7, this time requesting creation of an audio route 6 between the first audio input 2 and a second audio output 3. When the controller 7 receives the second creation signal it performs the same check. This time however it detects a conflict - generation of the audio route 6 would involve use of the first audio input 2 which is already employed in an audio route 6 created by the first network client 8. The controller 7 delays making the change and sends an alert signal back to the second network client 8 alerting the operator to the potential conflict. The operator at the second network client 8 may chose not to continue with the request to generate the new audio route 6. Alternatively, the operator may send back an override signal from the second network client 8 to the controller 7. On receipt of the override signal the controller 8 generates the further audio route 6.

A similar sequence of events will occur if the second network client 8 sends a creation signal requesting creation of an audio route 6 which involves the first audio output 3 and a second audio input 2. Again, the controller 7 will only create the requested audio route 6 on receiving the required override signal from the second network client 8.

In practice the controller 7 typically maintains a database of all the audio routes 6, the input and output ports 2,3 they employ and which network client 8 requested creation of the route 6. The network client 8 is typically identified by the network clients ip address or other unique identifier. When the controller 8 receives a creation signal from a network client 8 requesting creation of an audio route 6 it consults the database. If the audio input 2 and output 3 which would form part of the requested route 6 are unallocated or are used in routes previously created by that network client 8 then the controller 7 creates the new audio route 6. Alternatively if either the audio input 2 or audio output 3 is used in an audio route 6 created by a different network client 8 then the alert is generated.

In an alternative embodiment of the invention the alert is sent to both the first and second network clients 8. The controller 7 creates the audio route 6 on receiving the override signal from either of the first or second network clients 8. In a further alternative embodiment the controller 8 only creates the audio route 6 on receiving the override signal from both the first and second network clients 8.

In a further embodiment of the invention the controller 7 sends the alert to a further network client 8 which is neither the first nor second network client 8. The further network client 8 could for example be a master network client 8, the operator of which is responsible for resolving all network conflicts.

A further aspect of the invention will now be described by way of example only with reference to figure 1. Each of the network clients 8 is able to control the behaviour of one or more audio sources 4 over the audio network 1. Each audio source 4 has one or more parameters such as microphone gain, phantom power or sample rate conversion. An operator at a network client 8 can issue instructions through the network client 8 to an audio source 4 controlled by the network client 8 to vary these parameters so changing the behaviour of the audio source 4 if required.

In order to obtain control of an audio source 4 a second network client 8 issues a control signal to the controller 7 identifying the audio source 4. The controller 7 checks if the audio source 4 is already controlled by a first network client 8. If not then control of the audio source 4 is assigned to the second network client 8. If the audio source 4 is however already controlled by a first network client 8 then the controller 7 sends an alert to the second network client 8. The second network client 8 alerts the operator to the potential conflict. If the operator decides to proceed then he or she instructs the second network client 8 to issue an override signal to the controller 7. On receipt of the override signal the controller 7 transfers control of the audio source to the second network client 8.

The network client 8 may issue a control request at the same time as issuing a creation signal to acquire control of the audio source 4 employed in the new audio route 6. Control requests may also be issued independently of creation signals.

In an alternative embodiment of the invention the alert is issued to both the first and second network clients 8. The controller 7 transfers control of the audio source 4 on receiving an override signal from either the first or the second network client 8. In an alternative embodiment of the invention the controller 7 transfers control of the audio source 4 to the second network client 8 only on receiving an override signal from both the first and second network clients 8.

In a further embodiment of the invention the audio signal travelling along an audio route 6 is passed by the controller 7 to a processor 15 for processing before the signal is returned to the audio route 6. The controller 7 does this on receipt of a suitable instruction from a network client 8 (typically the network client 8 that created the audio route 6) or it may do this automatically.

In a further aspect of the invention when the controller 7 detects a conflict for the control of an audio source 4 the controller 7 sends an alert to both the first and second network clients 8. In this embodiment the alert signal prevents both the first and second network clients 8 from controlling the audio source 4. On receiving the alert signal both the first and second network clients 8 notify their respective operators of the loss of control of the audio source 4. If an operator wishes to regain control of the audio source 4 he or she sends an override signal from their associated network client 8 to the controller 7. The controller 7 temporarily permits the network client 8 to regain control of the audio source 4. At the end of the temporary period the network 1 returns to the state of neither network client 8 controlling the audio source 4 and a further override signal is required to further control the audio source 4.

Optionally one of the first and second network clients 8 can send a release control signal to the controller 7. The controller 7 then permanently provides control of the audio source 4 to the other network client 8. If there are more than two network clients 8 simultaneously requesting control of the audio source 4 then permanent control is released to one network client 8 only if all of the other network clients 8 have released control. Alternatively, if the audio source 4 is a protected audio source then it can only ever be controlled on a temporary basis.

## Claims

1. An audio network comprising
at least one audio input;
at least one audio output, the total number of audio inputs and outputs being greater than two;
a controller adapted to create audio routes, each audio route comprising an audio input, an audio output and an electrical connection therebetween;
a plurality of network clients, each network client being adapted to send a creation signal to the controller to create a new audio route;
the controller being adapted such that on receipt of a creation signal from a second network client requesting creation of a new audio route the controller determines if creation of the new audio route involves an audio input or audio output employed in an audio route created by a first network client and to send an alert to a network client if this is the case, the controller creating the new audio route on receipt of an override signal from the network client

2. An audio network as claimed in claim 1, wherein the controller sends an alert when the new audio route employs an audio output used in an audio route created by a first network client.

3. An audio network as claimed in either of claims 1 or 2, wherein the controller sends the alert to the second network client.

4. An audio network as claimed in either of claims 1 or 2, wherein the controller sends the alert signal to both the first and second network clients, the controller only creating the new audio route on receipt of the override signal from at least one of, preferably both, network clients.

5. An audio network as claimed in any one of claims 1 to 4, wherein the alert signal contains the identity of the first network client.

6. An audio network as claimed in any one of claims 1 to 5, wherein the audio routes pass through the controller.

7. An audio network as claimed in any one of claims 1 to 6, wherein the controller maintains a database of audio routes in the network.

8. An audio network as claimed in any one of claims 1 to 7, further comprising a signal processor connected to the controller, the controller being adapted to divert a signal passing along an audio route to the processor for processing before returning it to the audio route.

9. A method of audio route control in an audio network, the audio network comprising at least one audio input;
at least one audio output, the total number of audio inputs and outputs being greater than two;
at least first and second network clients each being adapted to provide a creation signal requesting creation of an audio route, each audio route comprising an audio input, and audio output and an electrical connection therebetween;
the method comprising the steps of
(a) receiving a creation signal from a second network client requesting creation of a new audio route;
(b) determining if creation of the new audio route involves an audio input or audio output in an audio route created by a first network client and sending an alert signal to a network client if this is the case;
(c) creating the audio route on receipt of an override signal from the network client

10. A method as claimed in either of claims 9 or 10, wherein the step of determination comprises determining if the new audio route employs an audio output used in an audio route created by a first network client.

11. A method as claimed in either of claims 9 or 10, wherein the alert is sent to the second network client

12. A method as claimed in either of claims 9 or 10, wherein the alert is sent to both the first and second network clients and the new audio route is created on receipt of an override signal from at least one of, preferably both, network clients.

13. A method as claimed in any one of claims 9 to 12, wherein the alert contains the identity of the first network client.
